## Europäisches Patentamt
## European Patent Office
## Office européen des brevets

(11) Numéro de publication: **0 033 054**
**A1**

(12) # DEMANDE DE BREVET EUROPEEN

(21) Numéro de dépôt: **80430029.1**

(22) Date de dépôt: **15.12.80**

(51) Int. Cl.³: **F 24 J 3/02**

(30) Priorité: **09.01.80 FR 8000745**

(43) Date de publication de la demande:
**05.08.81 Bulletin 81/31**

(84) Etats contractants désignés:
**BE CH DE GB IT LI SE**

(71) Demandeur: **Cassimatis, Jean**
**Avenue Georges Pompidou No. 751**
**F-04100 Manosque(FR)**

(72) Inventeur: **Cassimatis, Jean**
**Avenue Georges Pompidou No. 751**
**F-04100 Manosque(FR)**

(74) Mandataire: **Azais, Henri et al,**
**c/o CABINET BEAU DE LOMENIE 14, rue Raphael**
**F-13008 Marseille(FR)**

(54) **Capteur solaire à concentration comportant un réflecteur cylindrique fixe et son application.**

(57) L'invention a pour objet des capteurs solaires comportant un réflecteur cylindrique fixe et un absorbeur aplati situé dans le plan médian du réflecteur.

Un capteur selon l'invention comporte un réflecteur cylindrique 1 et un absorbeur aplati 2 situé dans le plan médian PP' du réflecteur. La section transversale du réflecteur comporte une pluralité d'arcs de cercle C1, C2 ...Cn, C'1, C'2...C'n qui sont juxtaposés et se raccordent tangentiellement l'un à l'autre. Les arcs C1, C2..Cn et les arcs C'1, C'2..C'n sont symétriques deux à deux par rapport au plan PP'. Le centre de l'arc Cn est dans le plan PP'. Les centres O1 et O'1 des arcs C1 et C'1 sont confondus avec le bord opposé du capteur.

Une application est la production d'eau chaude destinée à alimenter un circuit de chauffage.

./...

Fig. 2

Capteurs solaires à concentration comportant un réflecteur
cylindrique fixe.

La présente invention a pour objet des capteurs solaires à
concentration comportant un réflecteur cylindrique fixe.

On connaît plusieurs types de capteurs solaires comportant
un miroir cylindrique qui réfléchit les rayons solaires en les concentrant sur un absorbeur. Ces capteurs concentrateurs permettent d'obtenir des températures plus élevées que celles que l'on peut obtenir
avec des capteurs plans.

On a utilisé des miroirs cylindriques ayant une section
transversale circulaire ou parabolique qui concentrent vers un foyer
les rayons parallèles à l'axe, ce qui entraîne la nécessité de faire
pivoter le miroir réflecteur pour le maintenir constamment orienté
vers le soleil d'où des réalisations onéreuses.

On a également proposé des miroirs cylindriques ayant une
section transversale elliptique ou multiparabolique qui ne focalisent
pas la lumière en un point, mais permettent d'obtenir une concentration de la lumière sur un absorbeur de forme aplatie, parallèle aux
génératrices du réflecteur cylindrique, dont la surface est relativement restreinte. Ce dernier type de miroirs cylindriques présente
l'avantage de produire une concentration de la lumière même si la direction des rayons solaires fait un certain angle avec le plan de symétrie axial du miroir et ils peuvent donc rester fixes.

Un objectif de la présente invention est de procurer des
capteurs comportant un miroir cylindrique concentrateur de ce type,
c'est-à-dire un réflecteur qui permet, tout en restant fixe, de concentrer la lumière sur un absorbeur dans lequel circule un fluide caloporteur et de porter ce fluide à une température plus élevée que celle
qu'on peut obtenir dans un capteur plan, c'est-à-dire à une température de l'ordre de 50° à 80° qui convient notamment pour le chauffage
des bâtiments et des logements.

Un autre objectif de la présente invention est de procurer
des capteurs cylindriques ayant une section transversale différente
de celle des capteurs connus, qui permet d'obtenir une meilleure
concentration de la lumière sur une bande focale parallèle aux génératrices, située dans le plan de symétrie axial du capteur.

Les capteurs solaires selon l'invention sont des capteurs
du type à concentration comportant un réflecteur cylindrique fixe et un absorbeur de forme aplatie, situé dans le plan de symétrie du réflecteur qui est parallèle aux génératrices du cylindre.

Les objectifs de l'invention sont atteints au moyen d'un capteur dont la section transversale du réflecteur est une courbe continue composée d'au moins cinq arcs de cercle qui se raccordent tangentiellement l'un à l'autre dont l'un est centré dans ledit plan de symétrie et dont les autres sont centrés hors dudit plan de symétrie et sont symétriques deux à deux par rapport audit plan de symétrie.

La section transversale du réflecteur d'un capteur selon l'invention est composée de n paires d'arcs de cercle centrés hors dudit plan de symétrie et symétrique deux à deux par rapport audit plan et d'un arc qui forme le sommet dudit réflecteur qui est symétrique par rapport audit plan de symétrie.

Dans un capteur selon l'invention dont le réflecteur a une ouverture de largeur $2a$, les deux premiers arcs de cercle situés de part et d'autre de ladite ouverture ont un rayon égal à la largeur de ladite ouverture et sont centrés sur le bord opposé de l'ouverture.

La section transversale du réflecteur d'un capteur selon l'invention comporte n arcs de cercle successifs $C_1$, $C_2$...$C_n$ et n arcs $C'_1$, $C'_2$...$C'_n$ symétriques des précédents par rapport à un plan de symétrie $PP'$, lesquels arcs $C_1$, $C_2$...$C_n$ sont construits et définis de la façon suivante : le premier arc $C_1$, en partant d'un bord M du réflecteur a un rayon égal à la largeur de l'ouverture et un centre $O_1$ situé sur le bord opposé du capteur et il est délimité par le bord M du capteur et par un sommet $S_1$ situé sur un rayon incident $L'_1$ passant par le centre $O_1$ et faisant avec l'ouverture du capteur un angle $\beta_1$ inférieur à 30°, le deuxième arc $C_2$ est construit en traçant par le sommet $S_1$ un rayon incident $L_2$ faisant avec le rayon $L'_1$ un angle $\beta_2$ inférieur à 30°, en construisant le rayon réfléchi $R_2$, symétrique de $L_2$ par rapport à $L'_1$, qui recoupe le plan $PP'$ en un point $F'_2$ et en traçant par ce point $F'_2$ un rayon $L'_2$ parallèle au rayon $L_2$ qui recoupe le rayon $L'_1$ en un point $O_2$, puis en traçant l'arc de cercle $C_2$ de centre $O_2$ compris entre le point $S_1$ sur $L'_1$ et le point $S_2$ sur $L'_2$ et ainsi de suite en partant chaque fois d'un nouveau rayon incident $L_n$ faisant avec le rayon incident $L'_{n-1}$ passant par le centre de l'arc de cercle $C_{n-1}$ un angle $\beta_n$ inférieur à 30° jusqu'à ce que la somme des angles $\beta_1 + \beta_2...+\beta_n=90°$.

L'invention a pour résultat de nouveaux capteurs solaires à concentration équipés d'un réflecteur cylindrique fixe qui se différencie des réflecteurs cylindriques connus par un profil transversal
particulier composé de plusieurs arcs de cercle juxtaposés, au nombre
de cinq au moins, qui se raccordent tangentiellement l'un à l'autre
et qui sont définis par une construction géométrique basée sur les
propriétés optiques des miroirs sphériques.

Un avantage des capteurs selon l'invention réside dans le
fait que les réflecteurs sont fixes, ce qui réduit leur coût d'installation et d'entretien comparés à celui des capteurs à concentration
orientables. Grâce au profil particulier des réflecteurs cylindriques
selon l'invention, bien que ces réflecteurs soient fixes, on obtient
une concentration de l'énergie lumineuse sur un absorbeur dont la surface est inférieure à celle de l'ouverture du réflecteur, ce qui permet
d'obtenir dans l'absorbeur des températures d'échauffement du fluide
caloporteur nettement plus élevées que les températures obtenues avec
des capteurs plans. Un capteur selon l'invention permet d'obtenir des
températures de l'ordre de 50° à 80°, qui conviennent bien pour l'alimentation d'un circuit de chauffage de bâtiment.

Les capteurs selon l'invention peuvent être placés par exemple sous une couverture transparente de bâtiment.

Un capteur selon l'invention réfléchit sur l'absorbeur tous
les rayons incidents qui tombent sur le réflecteur tant que le soleil
se trouve à l'intérieur d'un secteur d'environ 70° d'ouverture angulaire de part et d'autre du plan médian PP', c'est-à-dire pendant un
temps d'ensoleillement journalier de 9 heures environ.

La symétrie du réflecteur par rapport au plan médian PP'
permet d'obtenir des performances égales le matin et l'après-midi si
le plan médian est confondu avec le méridien du lieu et si les génératrices du réflecteur sont parallèles à l'axe du monde. Chacune des
faces latérales de l'absorbeur reçoit les rayons réfléchis l'une le
matin et l'autre l'après-midi. Aux environs de midi, les deux faces de
l'absorbeur reçoivent des rayons réfléchis et l'ombre portée par l'absorbeur est minima.

Un avantage des capteurs selon l'invention réside dans le fait
que les réflecteurs peuvent être réalisés pour un faible coût par emboutissage de tôles à la presse, per thermoformage de plaques en matière plastique ou fabriqués en résines stratifiées et le poids des
capteurs est très réduit. Les coûts de fabrication des capteurs et des structures qui les supportent sont donc peu élevés. Notamment, les capteurs selon l'invention peuvent être placés sous une toiture transparente sans avoir à renforcer la charpente de soutien de la toiture.

La description suivante se réfère aux dessins annexés qui représentent, sans aucun caractère limitatif, des exemples de réalisation et d'applications des capteurs solaires à réflecteur cylindrique fixe selon l'invention.

La figure 1 est une figure géométrique qui représente un faisceau lumineux réfléchi par un miroir sphérique.

La figure 2 représente la construction géométrique de la section transversale d'un réflecteur de capteur selon l'invention.

Les figures 3 et 4 représentent des modes de réalisation d'absorbeurs de capteurs selon l'invention.

Les figures 5 et 6 représentent des applications de capteurs selon l'invention sous une toiture transparente.

La figure 7 représente le tracé d'une demi-section transversale d'un réflecteur selon l'invention comparé au tracé d'un réflecteur parabolique et d'un réflecteur elliptique.

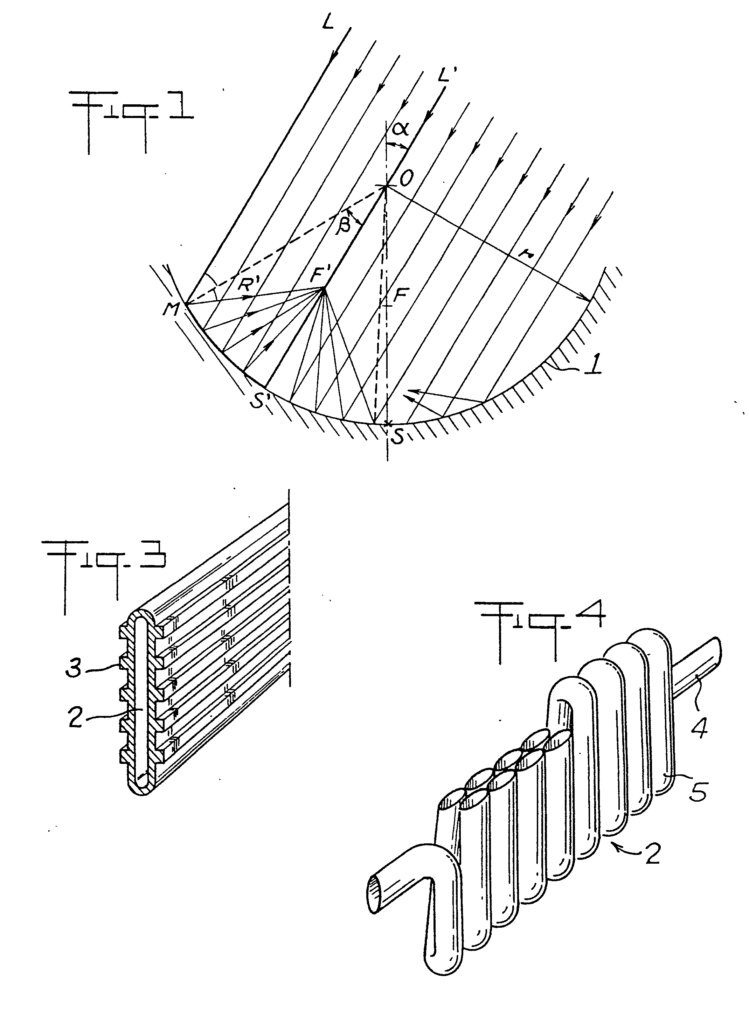

La figure 1 représente un miroir 1 ayant la forme d'une calotte sphérique de centre 0, de sommet S, d'axe OS et de rayon r.

On rappelle qu'un faisceau lumineux parallèle à l'axe OS est réfléchi sous la forme d'un faisceau focalisé vers un foyer ponctuel F situé à mi-distance entre le centre 0 et le sommet S.

Si la source lumineuse se trouve à l'infini hors de l'axe optique, c'est-à-dire si les rayons lumineux L font un angle α avec l'axe OS de la calotte sphérique, les rayons réfléchis enveloppent une surface caustique ayant deux nappes l'une tangentielle et l'autre sagittale. Si l'on considère une section du miroir par un plan axial, tous les rayons d'un faisceau compris entre deux rayons incidents L et L' qui rencontrent le miroir à l'intérieur d'un secteur ayant une demi-ouverture angulaire β de l'ordre de 30° (en fait 28°5) sont réfléchis selon des rayons R' qui recoupent l'axe OS' en un point F' situé à mi-distance entre le centre 0 et le sommet S'. Le point F' constitue un foyer pour ce faisceau. On a représenté sur la figure 1, en hachures, le faisceau incident compris entre les rayons L et L' et le faisceau réfléchi qui lui correspond et on a représenté en trait fort la portion du miroir qui concourt à la réflexion de ce faisceau. On va expliquer ci-après comment on construit un miroir cylindrique fixe selon l'invention en associant bout à bout plusieurs arcs de cercle qui vont réfléchir la lumière comme l'arc MS' de la figure 1 et qui vont concentrer la lumière réfléchie, depuis l'aube jusqu'au coucher du soleil, sur un absorbeur aplati qui est situé dans le plan de symétrie parallèle aux génératrices du miroir et dans lequel circule un fluide caloporteur.

La figure 2 est une figure théorique qui permet d'expliquer la construction géométrique du profil transversal d'un réflecteur cylindrique selon l'invention. Soit PP' la trace du plan médian de symétrie parallèle aux génératrices et x xl la trace du plan de l'ouverture du miroir qui est perpendiculaire à PP'. Soit a la demi-ouverture du miroir que l'on désire construire. La longueur a détermine sur l'axe x xl le point M qui correspond à l'un des bords du miroir. Par ce point M, on trace un premier rayon incident Ll faisant avec l'axe x xl un angle $\beta$l inférieur à 30°.

La figure 2 représente un exemple de réalisation qui correspond à un cas extrême dans lequel les angles successifs $\beta$l, $\beta$2, $\beta$3 sont tous égaux à 30° et où le profil transversal du miroir est composé de cinq arcs de cercle seulement Cl, C2, C3, C'l, C'2 dont l'un, l'arc C3, est centré dans le plan PP' et dont les autres sont symétriques deux à deux par rapport au plan PP'.

Les angles $\beta$l, $\beta$2... $\beta$n peuvent être inégaux et peuvent être inférieurs à 30°, mais ils remplissent la condition $\beta$l+$\beta$2+..$\beta$n=90° et le nombre d'arcs de cercle qui composent un miroir selon l'invention est égal de façon générale à 2n - 1, n étant le nombre d'angles partiels $\beta$l, $\beta$2...$\beta$n dont la somme est égale à 90° et qui sont tous inférieurs à 30°. On voit donc que la plus petite valeur possible pour n est égale à 3. Le nombre n peut être théoriquement aussi grand que l'on veut mais, dans la pratique, il ne sert à rien de multiplier le nombre d'arcs de cercle et on choisira en pratique un nombre n compris par exemple entre 3 et 6. La valeur maxima des angles $\beta$ est choisie égale à 30° par application de la figure 1 pour obtenir une focalisation sensiblement ponctuelle du faisceau réfléchi.

Par application directe de la figure 1, on obtient un premier arc de cercle Cl en traçant à partir de M la droite MRl, symétrique de la droite MLl, qui représente le rayon réfléchi correspondant au rayon incident Ll. Cette droite recoupe la droite PP' en un point F'l. Par ce point, on trace la droite L'l qui recoupe la

droite x xl en un point Ol qui est le symétrique du point M par rapport à PP'. Du point Ol pris comme centre, on trace un arc de cercle Cl de rayon 2a qui passe par le point M et qui recoupe la droite L'l en un point Sl. L'arc de cercle Cl compris entre M et Sl constitue un premier tronçon du profil transversal d'un miroir selon l'invention. L'arc de cercle C'l, de centre 0'l, symétrique de l'arc Cl par rapport au plan PP', constitue un deuxième tronçon du profil transversal d'un réflecteur cylindrique selon l'invention.

On voit clairement sur la figure 2 que la construction géométrique qui a été utilisée pour déterminer les arcs Cl et C'l est exactement la même que celle qui apparaît en traits forts sur la figure 1. Le faisceau compris entre les rayons extrêmes Ll et L'l est compris à l'intérieur d'un secteur circulaire Cl de centre Ol ayant une ouverture angulaire βl inférieure à 30° et il se réfléchit suivant un faisceau qui est focalisé au point F'l qui se trouve placé sensiblement à mi-distance entre Ol et Sl. Le point F'l est à une distance du plan x xl d'ouverture du miroir égale à a.tgβl. Dans le cas de la figure où βl = 30, cette distance est dont égale à $\frac{a}{\sqrt{3}}$

Pour construire le deuxième arc de cercle C2 et son symétrique C'2 composant la suite du profil transversal d'un miroir selon l'invention, on utilise la même construction à partir de la droite L'l prise comme base remplissant la fonction de x xl dans le cas précédent. Par le point Sl on trace un rayon incident L'2 faisant avec le rayon L'l un angle β2 au plus égal à 30° puis on trace le rayon réfléchi R2 symétrique du rayon L'2 par rapport à la droite Sl, L'l. Le rayon R2 recoupe le plan PP' en un point F'2 qui sera le foyer du miroir C2. On trace par le point F'2 une droite L'2 parallèle à L2 qui recoupe la droite L'l en 02. En prenant 02 comme centre, on trace un arc de cercle passant par Sl qui recoupe la droite L'2 en S2. L'arc de cercle C2, compris entre Sl et S2, de centre 02 et l'arc de cercle C'2 symétrique de C2 par rapport au plan PP' constituent les deux tronçons suivant du profil transversal d'un miroir selon l'invention. Les deux arcs de cercle successifs Cl et C2 ont leurs centres 0l et 02 alignés sur la droite L'l et ils sont donc tangents en Sl.

On voit sur la figure 2 et par analogie avec la figure 1 que le faisceau compris entre les rayons extrêmes L2 et L'2 tombant sur la portion de miroir constituée par l'arc C2 est réfléchi suivant un faisceau qui est focalisé au point F'2. Par continuité, les rayons lumineux ayant un angle d'incidence compris entre β1 et β2 sont focalisés sensiblement en des points compris entre F'1 et F'2. Pour construire le troisième arc de cercle C3, on opère de façon identique à partir de la droite L'2 prise comme base. On trace à partir du point S2 un rayon incident L3 faisant avec la droite L'2 un angle β3 inférieur ou égal à 30°. Dans le cas de la figure β3 = 30° et β1 + β2 + β3 = 90°. La droite L3 est donc parallèle à PP'. Il en sera de même en général de la droite Ln puisque dans tous les cas β1 + β2 + ... βn = 90°. On trace·le rayon réfléchi R3 symétrique de L3 par rapport à L'2. Le rayon R3 recoupe PP' en F'3. Par F'3, on trace la droite L'3 qui est confondue avec PP' et qui recoupe la droite L'2 en 03. On trace l'arc de cercle C3 de centre 03 passant par S2 qui recoupe·la droite PP' en S3. On prolonge l'arc de cercle C3 jusqu'en S'2 symétrique de S2 par rapport à PP'. L'arc de cercle C3 compris entre S2 et S'2 constitue le sommet du profil transversal d'un miroir selon l'invention. Un faisceau incident parallèle à l'axe PP' compris entre le rayon extrême L3 et le rayon L'3, symétrique de L3 par rapport à PP', est contenu à l'intérieur d'un secteur ayant une demi-ouverture β3 inférieure à 30° et le faisceau réfléchi est focalisé en F'3 situé à mi-distance entre F'2 et S3.

Un capteur selon l'invention comporte donc un réflecteur cylindrique dont les génératrices sont perpendiculaires au plan de la figure 2 et dont la section transversale est composée de plusieurs arcs de cercle C1, C2...Cn C'1, C'2 dont les rayons vont en décroissant. Le nombre n est au moins égal à 3 et, en pratique, il sera compris par exemple entre 3 et 6. Les arcs C1 et C'1, C2 et C'2 etc... forment des paires d'arcs symétriques par rapport au plan de symétrie PP' qui sont centrés hors de ce plan tandis que l'arc Cn est centré dans le plan PP'.

Un capteur selon l'invention comporte, en outre, un absorbeur 2 dans lequel circule un fluide caloporteur. Cet absorbeur 2 présente la forme d'un tube aplati ou oblong ou d'une pluralité de tubes situés dans le paln PP' entre le foyer F'1 des premiers arcs de cercle C1, C'1 et le foyer F'n du dernier arc de cercle· Cn.

Quelle que soit l'orientation des rayons incidents par rapport au réflecteur 1, les rayons réfléchis par le miroir sont concentrés sur l'absorbeur 2 et il n'est donc pas nécessaire de faire pivoter le capteur qui reste fixe. De préférence, le réflecteur 1 est placé de telle sorte que ses génératrices soient parallèles à l'axe du monde et l'ouverture du capteur est dirigée vers le Sud, de telle sorte que le plan de symétrie PP' du capteur est confondu avec le plan méridien du lieu d'implantation. En variante, les génératrices du capteur peuvent aussi être disposées horizontalement en direction Est-Ouest, l'ouverture du capteur étant tournée vers le Sud et le plan PP' étant incliné pour obtenir la meilleure efficacité en hiver.

L'absorbeur 2 peut également être composé d'un ou plusieurs tubes à ailettes dont les ailettes sont situées dans le plan PP' entre les points F'1 et F'n et reçoivent les rayons réfléchis par le réflecteur 1.

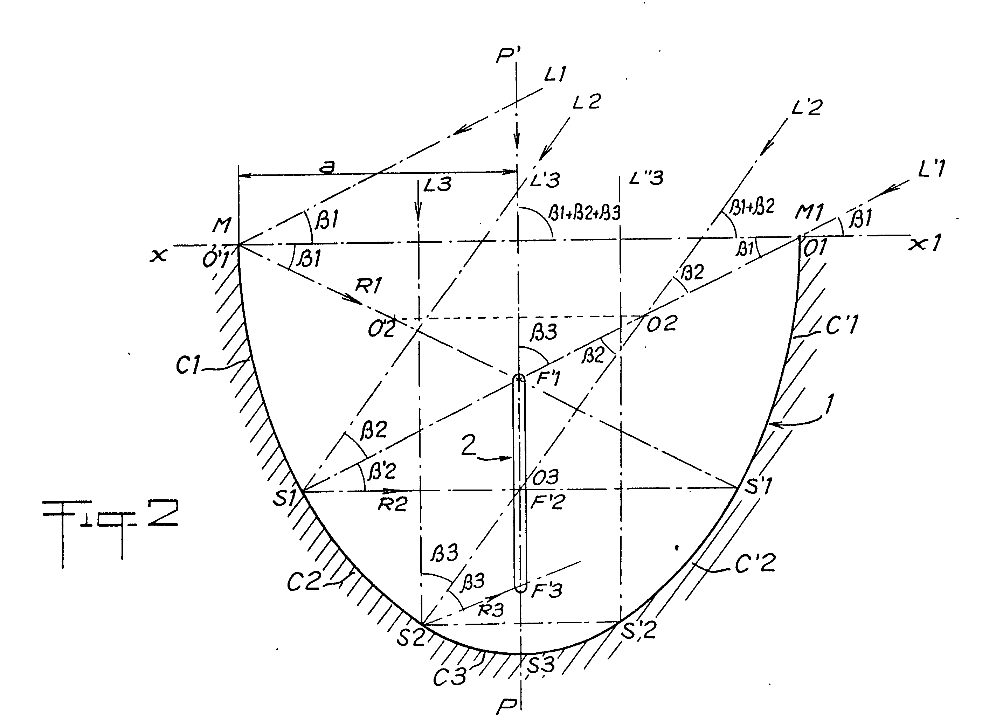

Les figures 3 et 4 représentent deux exemples d'absorbeurs aplatis équipant des capteurs selon l'invention.

La figure 3 représente un absorbeur 2 composé d'un tube de section transversale oblongue dont les faces latérales comportent des nervures 3 parallèles aux génératrices du réflecteur.

La figure 4 représente un absorbeur 2 qui est composé d'un tube 4 qui forme un serpentin à spires jointives dont les boucles 5 sont aplaties dans le plan PP'. On a représenté sur cette figure certains tubes sectionnés pour la clarté du dessin. La hauteur des boucles 5 est égale à la distance F'1 F'n et la largeur du serpentin est égale à la longueur du réflecteur cylindrique 1.

La figure 2 a permis d'expliquer la forme géométrique très particulière d'un réflecteur cylindrique selon l'invention. Bien entendu, pour fabriquer ces réflecteurs, on fabriquera d'abord un mandrin cylindrique, par exemple un mandrin en bois, que l'on taillera pour lui donner un profil en forme d'arcs de cercle successifs tel que défini par la figure 2 et ensuite, on formera des réflecteurs cylindriques par formage de tôles ou de plaques sur ce mandrin. Les réflecteurs pourront être fabriqués par exemple en résine stratifiée dont les couches successives seront appliquées sur un mandrin ou bien en emboutissant ou en cintrant des tôles minces par exemple des tôles d'aluminium ou d'acier inoxydable au moyen d'un mandrin monté sur une presse ou encore par thermoformage, sur un mandrin chauffé, de plaques en matière thermoplastique qui sont ensuite revêtues intérieurement d'une couche réfléchissante ou en verre cintré recouvert d'un tain.

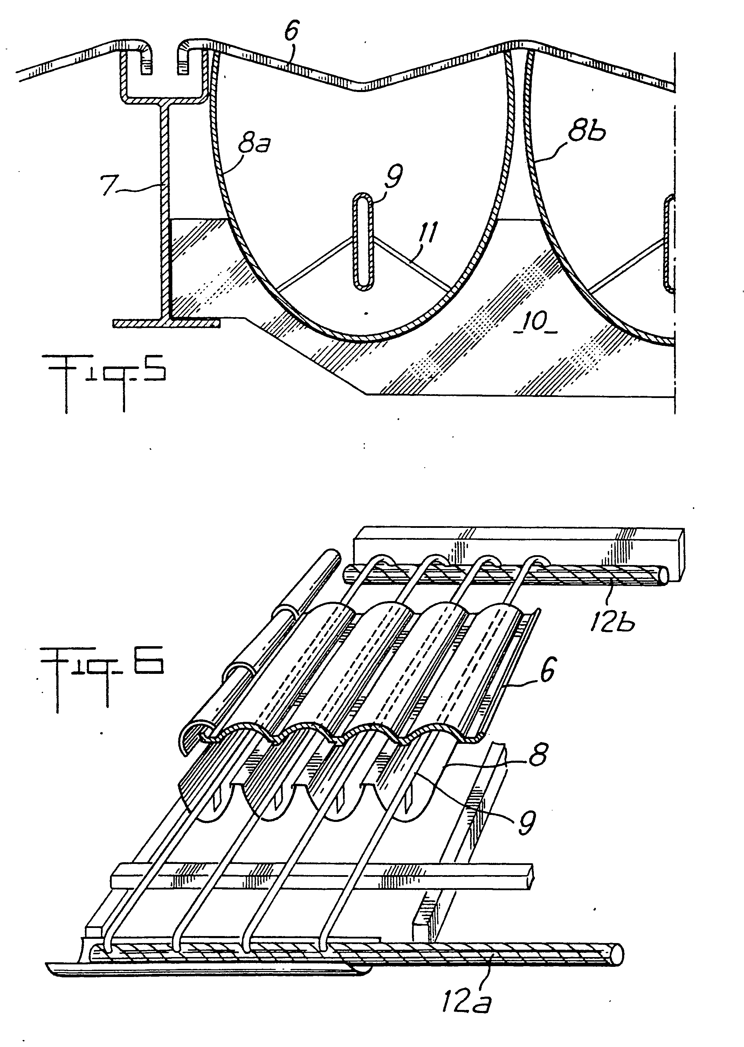

La figure 5 représente une application de capteurs selon l'invention posés sous une couverture transparente 6. Le repère 7 représente des profilés qui supportent des bacs de couverture 6 transparents. Les réflecteurs cylindriques 8a, 8b sont juxtaposés sous la couverture. Le repère 9 représente l'absorbeur. Le repère 10 représente des supports qui sont posés sur les semelles des profilés 7 et qui sont découpés en berceaux pour supporter les réflecteurs 8a, 8b... Les absorbeurs 9 sont reliés aux absorbeurs par une armature 11 ou par tout autre support équivalent. Les bacs de couverture 6 ont une forme ondulée qui facilite l'écoulement de la pluie et qui réduit les pertes de lumière par réflexion. La couverture 6 peut être composée de bacs dont la concavité est dirigée vers le haut comme le représente la figure 5 ou au contraire, de bacs convexes vers le haut comme des tuiles canal.

L'armature 11 est une armature isolante thermiquement qui assure à la fois le maintien et le centrage de l'absorbeur 9.

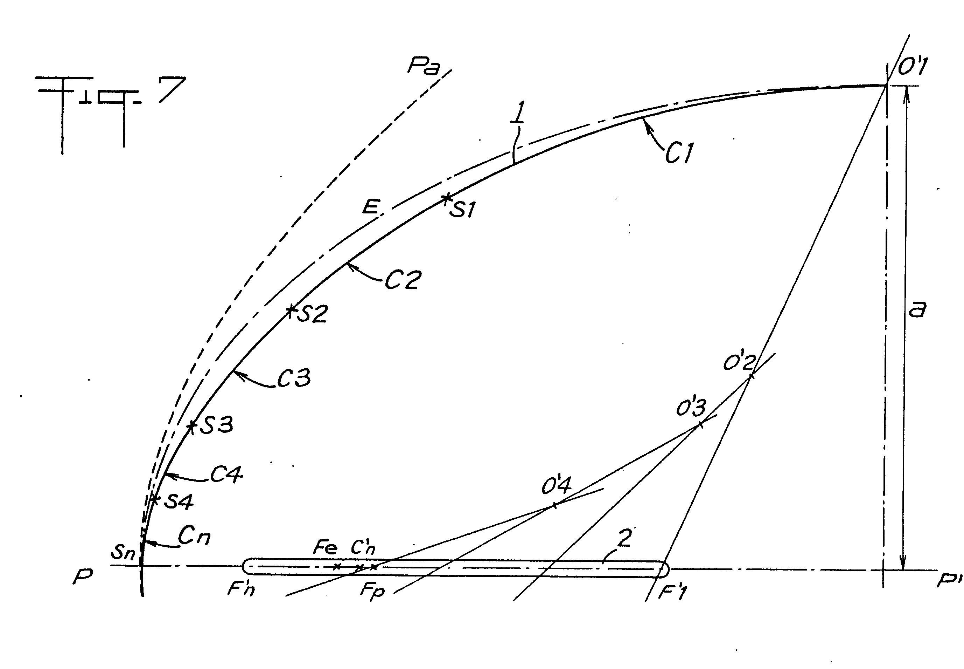

La figure 6 est une vue en perspective avec arrachement partiel montrant une portion de toiture, par exemple un pan de toiture orienté vers le Sud qui est composé de capteurs selon l'invention 8, 9 placés sous une couverture transparente 6 composée d'une plaque transparente ondulée qui présente, au-dessus de chaque capteur, des ondulations dont la convexité est dirigée vers le haut et dont le pas est égal au pas des réflecteurs 8. Les absorbeurs 9 des différents capteurs sont connectés en parallèle entre un collecteur aller 12a et un collecteur retour 12b.

La figure 7 représente en traits pleins, un demi-profil transversal d'un réflecteur 1 selon l'invention, symétrique par rapport au plan PP' et ayant une demi-ouverture a. On a pris comme exemple un réflecteur composé de quatre paires d'arcs de cercle C1, C2, C3 et C4, symétriques deux à deux par rapport au plan PP' et d'un arc Cn dont le centre $O'n$ est dans le plan PP'. Les points $O'1$, $O'2$, $O'3$ et $O'4$ représentent les centres des arcs $C'1$, $C'2$, $C'3$ et $C'4$ symétriques des arcs C1, C2, C3 et C4. Les points S1, S2, S3 et S4 sont les points de jonction entre arcs juxtaposés. Le repère 2 représente l'absorbeur allant du foyer $F'1$ de l'arc C1 au foyer $F'n$ de l'arc Cn.

A titre de comparaison, on a représenté sur la même figure en pointillés une parabole Pa tangente au sommet Sn et de foyer Fp. On a également représenté en traits mixtes un quart d'ellipse E dont le petit axe et le grand axe seraient confondus avec ceux du réflecteur 1. Cette figure montre clairement les différences notables entre un réflecteur multicirculaire 1 selon l'invention et un réflecteur connu à section parabolique ou elliptique.

REVENDICATIONS

1. Capteur solaire à concentration comportant un réflecteur cylindrique fixe et un absorbeur de forme aplatie, qui est situé dans le plan de symétrie dudit réflecteur parallèle aux génératrices du cylindre, caractérisé en ce que la section transversale dudit réflecteur est une courbe continue composée d'au moins cinq arcs de cercle qui se raccordent tangentiellement l'un à l'autre dont l'un est centré dans ledit plan de symétrie et dont les autres sont centrés hors dudit plan de symétrie et sont symétriques deux à deux par rapport au plan de symétrie.

2. Capteur solaire selon la revendication 1, caractérisé en ce que la section transversale dudit réflecteur est composé de n paires d'arcs de cercle centrés hors dudit plan de symétrie et symétriques deux à deux par rapport audit plan et d'un arc qui forme le sommet dudit réflecteur et qui est symétrique par rapport audit plan de symétrie.

3. Capteur selon l'une quelconque des revendications 1 et 2 dans lequel le réflecteur a une ouverture de largeur 2a, caractérisé en ce que les deux premiers arcs de cercle situés de part et d'autre de ladite ouverture ont un rayon égal à la largeur 2a de ladite ouverture et sont centrés sur le bord opposé de l'ouverture.

4. Capteur selon l'une quelconque des revendications 1 à 3, caractérisé en ce que la section transversale dudit réflecteur comporte n arcs de cercle successifs C1, C2...Cn et n arcs de cercle C'1, C'2...C'n, symétriques des précédents par rapport à un plan de symétrie PP', lesquels arcs C1, C2...Cn sont construits et définis de la façon suivante : le premier arc C1, en partant d'un bord du réflecteur, a un rayon égal à la largeur 2a de l'ouverture et un centre 01 situé sur le bord opposé du capteur et il est délimité par le bord M du capteur et par un sommet S1 situé sur un rayon incident L'1 passant par le centre 01 et faisant avec l'ouverture du capteur un angle β1 inférieur à 30°, le deuxième arc C2 est construit en traçant par le sommet S1 un rayon incident L2 faisant avec le rayon L'1 un angle β2 inférieur à 30°, en construisant le rayon réfléchi R2, symétrique de L2 par rapport à L'1, qui recoupe le plan PP' en un point F'2 et en traçant par ce point F'2 un rayon L'2 parallèle au rayon L2 qui recoupe le rayon L'1 en un point 02, puis en traçant l'arc de cercle C2 de centre 02 compris entre le point S1 sur L'1 et le point S2 sur L'2 et ainsi de suite en partant chaque fois d'un nouveau rayon incident Ln faisant avec le rayon incident, L'n-1 passant par le centre de l'arc de cercle Cn-1 un angle $\beta_n$ inférieur à 30° jusqu'à ce que la somme des angles $\beta_1 + \beta_2...+\beta_n = 90°$

5. Capteur selon la revendication 4, caractérisé en ce que l'absorbeur présente la forme d'une bande aplatie placée dans le plan de symétrie PP' dont la largeur est délimitée par un premier point F'1 qui correspond à l'intersection du rayon L'1 avec le plan PP' et par un deuxième point F'n qui est situé à mi-distance entre le centre On et le sommet Sn de l'arc de cercle Cn.

6. Application de capteurs selon l'une quelconque des revendications 1 à 5, caractérisée en ce qu'une pluralité de capteurs sont juxtaposés parallèlement les uns aux autres et sont recouverts par une couverture transparente étanche à la pluie qui constitue la toiture d'un bâtiment.

7. Application selon la revendication 6, caractérisée en ce que ladite couverture transparente est constituée par une plaque ondulée dont chacune des ondulations recouvre l'un des capteurs.

8. Application selon l'une quelconque des revendications 6 et 7, caractérisée en ce que les réflecteurs des capteurs sont posés sur des supports en forme de berceaux qui sont supportés par la charpente supportant la toiture.

9. Application selon l'une quelconque des revendications 6 à 8, caractérisée en ce que les génératrices du réflecteur sont placées parallèles à l'axe du monde et le plan de symétrie PP' des réflecteurs est le plan méridien du lieu d'implantation.

Fig. 1

Fig. 3

Fig. 4

0033054

Fig. 2

Fig.5

Fig.6

Fig. 7

**0033054**

Office européen
des brevets

**RAPPORT DE RECHERCHE EUROPEENNE**

Numéro de la demande

EP 80 43 0029

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | F 24 J 3/02 |
| A | US - A - 4 024 852 (L'ESPERANCE)<br><br>* Brevet en entier *<br>--- | 1 | |
| A | US - A - 3 321 012 (HERVEY)<br><br>* Brevet en entier *<br>--- | 1 | |
| A | FR - A - 2 309 809 (CAULIER)<br><br>* Brevet en entier *<br>--- | 1 | |
| A | US - A - 4 148 296 (PARLATO)<br><br>* Brevet en entier *<br><br>--------- | 6 | |

**DOMAINES TECHNIQUES RECHERCHES (Int. Cl.³)**

F 24 J
F 21 V
H 01 Q
G 02 B
F 21 S
H 01 L

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 16.04.1981 | PERROTTA |

OEB Form 1503.1   06.78